# EUROPEAN PATENT SPECIFICATION

(11) **EP 2 327 498 B1**
(45) Date of publication and mention of the grant of the patent: **16.01.2019**
(21) Application number: 10174930.7
(22) Date of filing: 01.09.2010
(51) Int. Cl.: B23H 7/06

(54) **Wire-cut electric discharge machine and electric discharge machining method**
Elektrische Drahterodiermaschine und elektrisches Erodierverfahren
Machine à décharge électrique de coupe-pâte et procédé d'usinage de décharge électrique

(30) Priority: 26.11.2009 JP 2009268932
(43) Date of publication of application: 01.06.2011
(73) Proprietor: FANUC CORPORATION, Oshino-mura Minamitsuru-gun Yamanashi 401-0597 (JP)
(72) Inventor: Murai, Masao, Minamitsuru-gun Yamanashi 401-0597 (JP); Yoshida, Masayuki, Minamitsuru-gun Yamanashi 401-0597 (JP)
(74) Representative: Haseltine Lake LLP

(56) References cited:
- JP-A- 6 114 637
- JP-A- 10 138 048
- JP-A- 11 048 042

## Description

### TECHNICAL FIELD

The invention relates to a wire-cut electric discharge machine and an electric discharge machining method having a function capable of correcting variation of a machined size or shape accuracy of a workpiece (machining target) among a plurality of wire-cut electric discharge machines of the same type.

### BACKGROUND ART

In wire-cut electric discharge machining, a large number of factors including mechanical motion of a wire-cut electric discharge machine supporting a wire electrode, vibration behavior of a wire electrode, waveform and intensity of machining voltage pulse, flow of machining liquid, and behavior of machining sludge affect machining result. Therefore, even when wire-cut electric discharge machines of the same type are used to machine workpieces under the same machining conditions, sizes and shapes of the workpieces obtained through machining by respective wire-cut electric charge machines may vary, and thus the exactly the same machining result may not be obtained.

The variation of machining of workpieces among a plurality of wire-cut electric discharge machines of the same type is not a big issue in rough machining, but is a big issue in finish machining, which has to be precise, since a defective product may be produced. In such a case, the issue is generally dealt with by evaluating machining result of workpieces and then modifying a part of machining conditions.

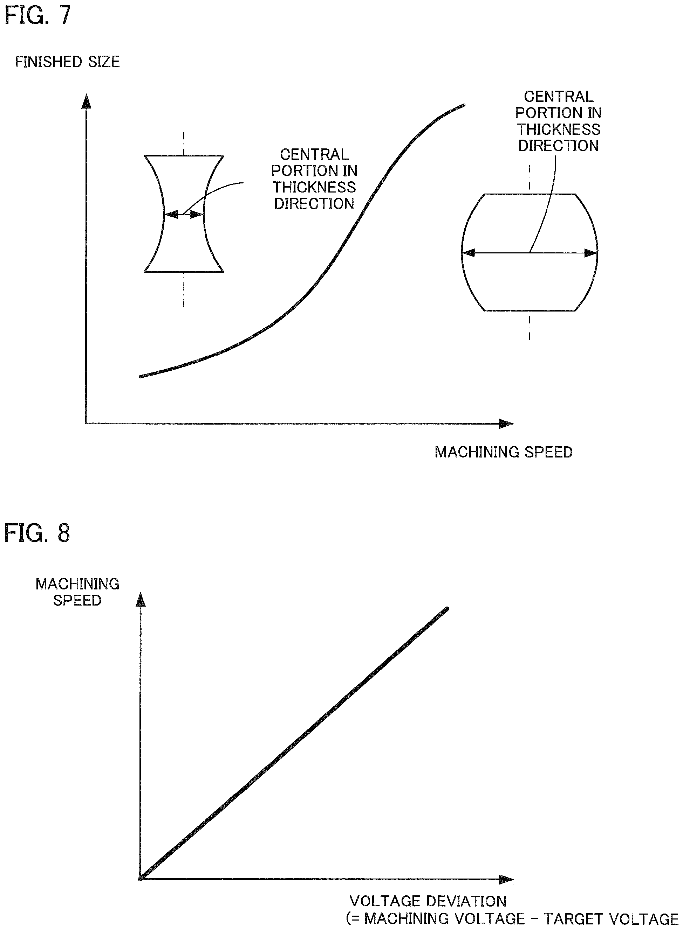

It is known that in skim machining, a size and shape of a workpiece vary when a relative moving speed of a wire electrode and a workpiece (hereinafter, referred to as "machining speed") is changed. When the machining speed is high, machining amount per unit distance decreases so that a finished size becomes large and the workpiece has a shape with central bulge in the thickness direction. On the contrary, when the machining speed is low, machining amount per unit distance increases so that a finished size becomes small and the workpiece has a shape with central depression in the thickness direction (see FIG. 7) . FIG. 7 is a graph for explaining a relation between a machining speed, and a finished size and shape of a workpiece in a conventional technique.

In general, an average voltage servo feed, in which a machining speed is determined based on a difference (to be referred to as "voltage deviation") of a target voltage with respect to a machining voltage between the wire electrode and the workpiece (to be referred to as "machining-gap voltage") during electric discharge machining as shown in FIG. 8, and in which the wire-cut electric discharge machine is controlled according to the determined machining speed is used. In the average voltage servo feed, when a target size and shape precision cannot be achieved, a machining speed is adjusted by changing the target voltage (that is, by changing the voltage deviation).

However, in such a method of determining a machining speed, the changed machining condition has to be stored separately from the default machining conditions. When the number of changed conditions increases, a controller of the wire-cut electric discharge machine needs extra storage area and a cumbersome process for managing the changed conditions is necessary. In addition, when a machining program is generated by using CAD/CAM, it is typical that machining conditions are collectively defined in the machining program. In this case, a user having a plurality of wire-cut electric discharge machines has to generate a machining program for each of the wire-cut electric discharge machines, for example, which is not user friendly.

Therefore, there has been an attempt to correct variation of machining result of electric discharge machining on a wire-cut electric discharge machine side independently of machining conditions.

Japanese Patent Application Laid-Open (JP-A) No. 10-138048 discloses a technique in which a no-load voltage during non-machining is measured before machining, a voltage correction coefficient that matches the measured value with a predetermined reference value is calculated and stored, and a feeding speed for machining at the time when a workpiece is actually machined is controlled according to a corrected machining-gap voltage obtained by multiplying the measured value of a machining-gap voltage by the stored voltage correction coefficient. The technique can correct changes due to variation of electric constants in a machining power supply and a current path, but is not effective for variation due to other factors such as mechanical factors of a wire-cut electric discharge machine.

Japanese Patent Application Laid-Open (JP-A) No. 11-48042 discloses a technique in which a machining voltage and a machining speed during actual machining are measured, and machining conditions are automatically corrected based on the measured values such that they fall within a predetermined standard range. The technique can suppress variation of machining voltage and machining speed due to mechanical factors in addition to variation of electric constants in a wire-cut electric discharge machine. In addition, in this technique, shape modification is performed by changing the machining voltage or the machining speed since the machining voltage and the machining speed during machining always change due to change in the machined groove width, the behavior of the wire electrode, a density of machining sludge, and the like. Therefore, a workpiece of the same size and the same precision may not obtained even when the machining voltage and the machining speed are adjusted to be in the standard range. In view of the above, it is difficult to perfectly predict a machining result only from machining information during machining

Therefore, as disclosed in Japanese Patent Application Laid-Open (JP-A) No. 6-114637, there has been proposed a technique in which a machining result is input to a controller of a wire-cut electric discharge machine, input value and a predetermined target value are compared with each other, and optimal conditions are searched while modifying a machining program and machining conditions based on the comparison result. Since in the technique, machining conditions are corrected based on the machining result, the correction is effective for any variation factors. However, since the machining conditions have to be directly changed in the technique, management of machining programs and machining conditions for each of a plurality of wire-cut electric discharge machines of the same type is cumbersome if a plurality of wire-cut electric discharge machines exist.

### SUMMARY OF THE INVENTION

In view of the problems of the related art, an object of the present invention is to provide a wire-cut electric discharge machine capable of providing a machining result without variation for each of wire-cut electric discharge machines of the same type by correcting machining characteristics according to the machining result and a wire-cut electric discharge machining method that does not cause the variation.

Wire-cut electric discharge machines according to aspects of the invention are defined in the independent claims. Preferred features are defined in the dependent claims.

Electric discharge machining methods according to aspects of the invention are defined in the independent claims.

According to the invention, in view of the problems of the related art, a wire-cut electric discharge machine capable of providing a machining result without variation for each of wire-cut electric discharge machines of the same type by correcting machining characteristics according to the machining result and a wire-cut electric discharge machining method that does not cause the variation can be provided.

### BRIEF DESCRIPTION OF DRAWINGS

FIG. 1 is a view for explaining a relation between a workpiece thickness and a size error.
FIG. 2 is a view for explaining a relation between a workpiece thickness and a correction gain when a machining voltage is corrected.
FIG. 3 is a view for explaining a relation between a workpiece thickness and a correction coefficient.
FIG. 4 is a view for explaining a relation between a workpiece thickness and a correction gain when a target voltage is corrected.
FIG. 5 is a main part of a configuration view of a wire-cut electric discharge machine according to the invention.
FIGs. 6A to 6C are views for explaining tables of correct gains stored in a memory of a controller of the wire-cut electric discharge machine of FIG. 5.
FIG. 7 is a graph for explaining a relation between a machining speed, and a finished size and shape of a workpiece in a conventional technique.
FIG. 8 is a graph for explaining average voltage servo feed according to the conventional technique.

### DESCRIPTION OF EMBODIMENTS

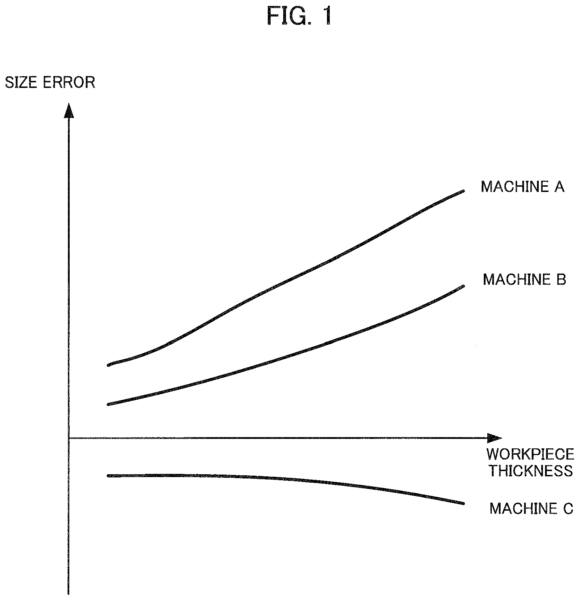

FIG. 1 is a view for explaining a relation between a workpiece thickness and a size error in a case where a wire electrode has a certain diameter and a workpiece is made of a certain material, where the horizontal axis represents workpiece thickness and the vertical axis represents size error.

Three wire-cut electric discharge machines A, B, and C of the same type have a tendency that a size error (absolute value) substantially linearly increases as the workpiece thickness increases even with some variation in a deviation (that is, size error) between a design data (target value) of a workpiece to be machined by an NC machining program and shape data (actually measured value) of the workpiece obtained by machining the workpiece as shown in FIG. 1. It is found from the experiment that absolute value of the size error changes depending on a diameter of the wire electrode or a workpiece material but the tendency of the change of the absolute value of the size error with respect to the workpiece thickness is the same for the wire-cut electric discharge machines A, B, and C.

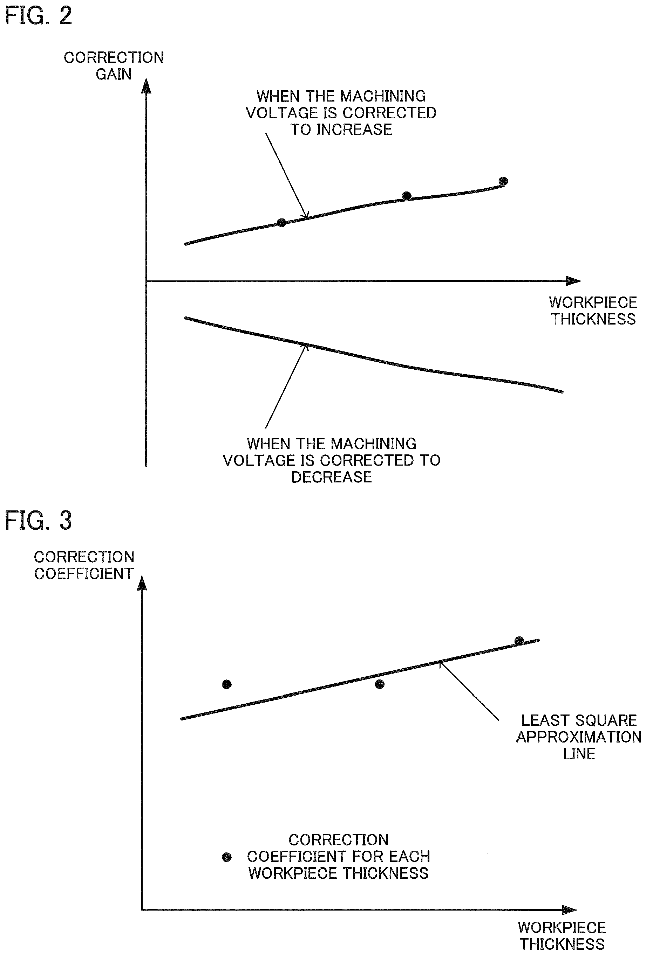

FIG. 2 is a view for explaining a relation between a workpiece thickness and a correction effect (correction gain). Here, the correct gain means a variation amount (µm) of the machined size of the workpiece when the machining voltage varies (increases or decreases) by 1%.

As described referring to FIG. 1, the larger the workpiece thickness is, the larger the change of the size (size error) of the machined workpiece becomes. Therefore, in order to deal with the issue, the correct gain (absolute value) is made to linearly increase as the workpiece thickness increases as shown in FIG. 2. It has been also found from an experiment result that the correct gain has substantially the same value for a plurality of electric discharge machines of the same type and that the value of the correct gain does not vary for the electric discharge machines.

Based on these results, a size error at a certain thickness is calculated based on a machining result of a workpiece of the thickness, the obtained size error is divided by a correct gain at the thickness, and +1 is added to the division result so as to obtain a correction coefficient. During actual machining of a workpiece of the thickness, an average of measured machining-gap voltages is multiplied by the correction coefficient so as to correct the machining voltage (voltage correction). Then a feeding speed for machining is controlled according to the corrected machining voltage as described above, whereby variation of wire-cut electric discharge machines is decreased, and thus a result having a size near the target size can be obtained.

For example, it is assumed that the machined size error of a workpiece having a thickness of 60 mm is +3 µm, and a correct gain when the thickness is 60 mm (variation amount (µm) of a machined size of a workpiece when the machining voltage varies by -1%) is -1 µm. In this case, the machining voltage has to be decreased by 3% (negative variation) in order to decrease the machined size of the workpiece by 3 µm so as to compensate for the machined size error. More specifically, a correction coefficient of the machining voltage of the workpiece having a thickness of 60 mm is defined to be (100-3)/100 = 0.97.

For next machining, if the measured value of the average machining-gap voltage is 100 V, the measured value (100 V) is multiplied by the correction coefficient 0.97 so as to obtain 97 V and then a feeding speed is determined while using the obtained voltage as the machining voltage . Through the voltage correction, the deviation between the machining voltage and the target voltage is decreased so that the machined speed is decreased comparing to that before correction. Therefore the change of the machined size is decreased, whereby the workpiece size obtained by machining approaches to the target value.

It is described above referring to FIGs. 1 and 2 that both of the machined size error of the workpiece and the correct gain substantially linearly change with respect to the workpiece thickness for arbitrary wire electrode diameter and workpiece material. It has been found from an experiment that the correction coefficient keeps a substantially constant value without large variation even when the workpiece thickness varies as shown in FIG. 3. Therefore, a correction coefficient calculated from a machining result obtained with a workpiece having an arbitrary thickness can be used with little modification for machining of a workpiece having a different thickness.

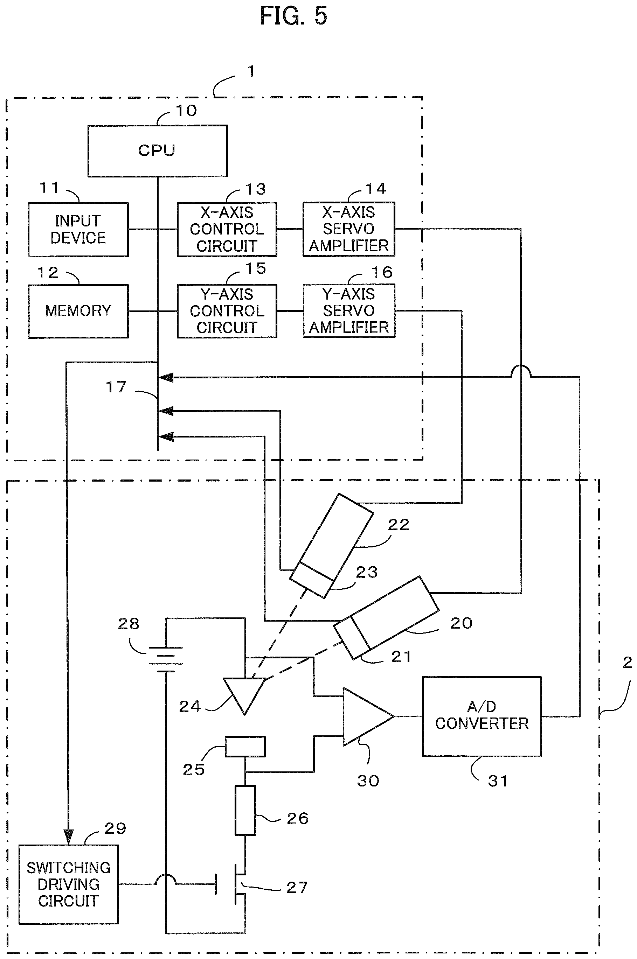

Although correct gains for respective workpiece thicknesses have to be previously stored in a memory 12 of a controller 1 (see FIG. 5), the correct gains vary little for each wire-cut electric discharge machine and thus the correct gains once obtained can be used for all wire-cut electric discharge machines of the same type.

When correct gains for only a few of different workpiece thicknesses are stored in the memory 12, a correct gain for a thickness, for which corresponding correct gain data is not stored, can be approximately calculated by linear interpolation of a correct gain for thicknesses that are stored.

As correct gains, a variation amount of a machined size of a workpiece when the machining voltage varies by -1% (decreases by 1%) and a variation amount of a machined size of a workpiece when the machining voltage varies by +1% (increases by 1%) have absolute values that do not have a big difference. However, the correct precision of the machining voltage can be increased if the variation amounts are separately obtained.

In a case where a correction coefficients are respectively obtained for a plurality of workpiece thicknesses, if a linear equation representing a relation between the workpiece thicknesses and the correction coefficients is calculated based on the data on the correction coefficients by the least square method as shown in FIG. 3, a correction coefficient for any workpiece thickness can be calculated using the linear equation, whereby the machining voltage can be corrected with high precision.

Hereinbefore, it has been explained that a variation of the workpiece machining result (a size of the machined workpiece) can be reduced by correcting the machining voltage. However, in a wire electric discharge machine, in which the machining speed is controlled by deviation between the machining voltage and the target voltage, a similar effect can be obtained by correcting the target voltage instead of the machining voltage.

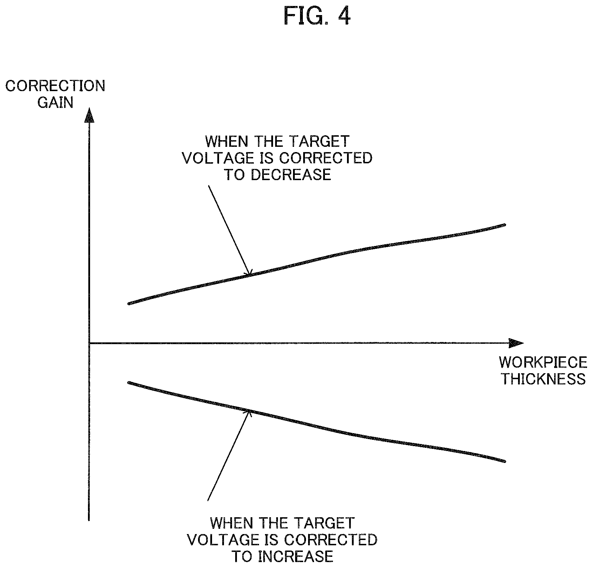

FIG. 4 is a view showing a relation between a workpiece thickness and a correction gain when the target voltage is corrected. Here, the correct gain means a variation amount (µm) of the machined size of a workpiece when the target voltage varies (increases or decreases) by 1%.

As can be seen from FIG. 4 compared with FIG. 2, if the machining voltage is corrected to increase, the correct gain has a positive value and if the machining voltage is corrected to decrease, the correct gain has a negative value . On the other hand, if the target voltage is corrected to increase, the correct gain has a negative value and if the target voltage is corrected to increase, the correct gain has a positive value. Specifically, in the cases where the machining voltage is corrected and where the target voltage is corrected, correction effects (correct gains) are opposite and the values (absolute value) of the correct gain are also slightly different. However, a trend of change of the correct gain with respect to a workpiece thickness is substantially the same. Therefore, even when the target voltage is corrected, a correction effect similar to that obtained when the machining voltage is corrected can be obtained.

FIG. 5 is a main part of a configuration view of a wire-cut electric discharge machine according to the invention. The wire-cut electric discharge machine includes a controller 1 and a working machine 2.

The controller 1 controls the entire wire-cut electric discharge machine. The controller 1 includes a processor (CPU) 10, an input device 11 and the memory 12. The memory 12 includes a ROM and RAM, and the processor (CPU) 10 controls the entire wire-cut electric discharge machine by a system software stored in the ROM. The input device 11 includes a keyboard or the like. Using the input device 11, an operator can input various data on machining conditions such as a target value of the machining voltage, a discharging period, a discharge current value, a wire feeding speed, and a pressure of machining liquid, and an operator can input data necessary for performing the invention as to be described later.

The processor (CPU) 10 outputs moving commands corresponding to the machining conditions to an X-axis control circuit 13 and a Y-axis control circuit 15 respectively according to the machining program stored in the RAM of the memory 12. The X-axis control circuit 13 and the Y-axis control circuit 15 outputs driving commands to an X-axis servo amplifier 14 and a Y-axis servo amplifier 16 for driving an X-axis servo motor 20 and a Y-axis servo motor 22, respectively.

The working machine 2 machines a workpiece 25, which is a machining target, based on machining conditions specified by the controller 1. More specifically, the working machine 2 includes the X-axis servo motor 20 and the Y-axis servo motor 22. The working machine 2 includes a DC power supply 28 configured to supply discharge energy to a machining gap between a wire electrode 24 and the workpiece 25, a current limiting resistor 26 configured to limit a current output from the DC power supply 28, a switching device 27, and a switching driving circuit 29 configured to control on/off of the switching device 27.

A circuit including the wire electrode 24, the workpiece 25, the current limiting resistor 26, the switching device 27, and the DC power supply 28 configures a wire-cut electric discharging power supply circuit for applying a pulse voltage/pulse current the machining gap between the wire electrode 24 and the workpiece 25.

A machining-gap voltage detecting unit (not shown) detects a voltage applied to a machining gap between the wire electrode 24 and the workpiece 25. The detected machining-gap voltage is amplified by an amplifier 30, converted to digital values by an A/D converter 31 every predetermined period, and output to the controller 1. The controller 1 calculates an average machining-gap voltage based on machining-gap voltages between electrodes (digital values) that have been input to the controller 1.

The controller 1 controls to drive the working machine 2 to machine the workpiece 25 at a machining speed according to the average machining-gap voltage. Alternatively, the controller 1 controls to drive the working machine 2 to machine the workpiece 25 at a machining speed according to a voltage deviation that is a difference between the average machining-gap voltage and the target voltage.

The X-axis servo motor 20 is provided with an X-axis encoder 21 and the Y-axis servo motor 22 is provided with a Y-axis encoder 23. The values detected by the X-axis encoder 21 and the Y-axis encoder 23 are vector-summed to obtain an actual machining speed.

The wire electrode 24 is provided while stretched under a predetermined tension between a pair of wire guides (not shown) arranged at a predetermined distance from each other. The wire electrode 24 is configured to be supplied at a predetermined speed by a supply device that is not shown.

In the embodiment of the invention, the memory 12 of the controller 1 stores a table showing a relation between workpiece thicknesses and correct gains or correction coefficients shown in FIGs 2 to 4.

The controller 1 of the wire-cut electric discharge machine typically acquires and keeps data on a diameter of the wire electrode 24, data on a material of a workpiece to be machined and data on workpiece thicknesses, and can perform electric discharge machining by reading such data. Alternatively, these values may be input to the controller 1 by an operator through the input device 11.

FIGs . 6A to 6C are views for explaining tables of correct gains stored in the memory 12 of the controller 1.

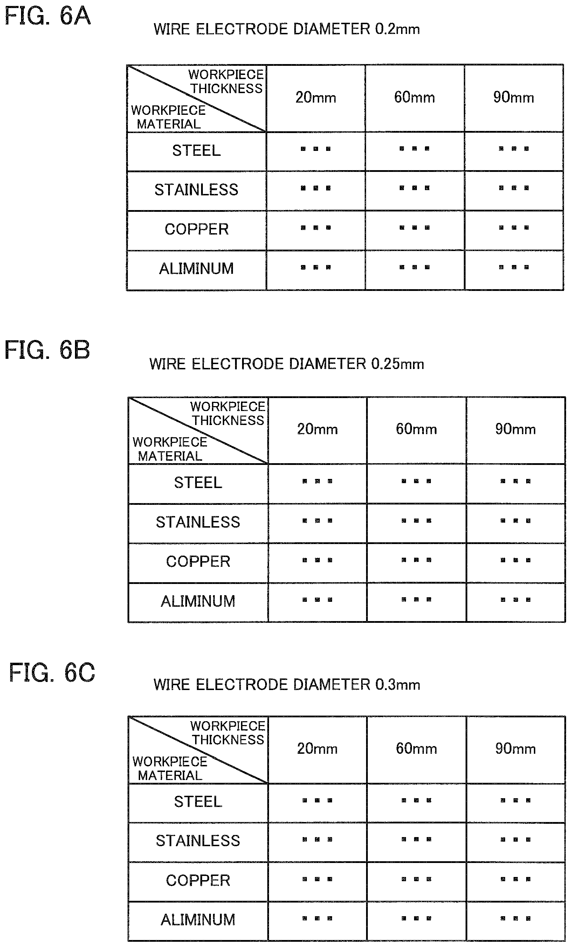

The memory 12 of the controller 1 shown in FIG. 5 stores data on correct gains that are respectively determined depending on a diameter of the wire electrode (0.2 mm, 0.25 mm, or 0.30 mm, for example), a workpiece material (steel, stainless steel, copper, or aluminum, for example), and a workpiece thickness (20 mm, 60 mm, or 90 mm, for example) . FIG. 6A shows that the memory 12 stores correct gains in a table for respective workpiece materials and workpiece thicknesses when the wire electrode has a diameter of 0.2 mm, FIG. 6B shows the same when the wire electrode has a diameter of 0.25 mm, and FIG. 6c shows the same when the wire electrode has a diameter of 0.3 mm.

When data on each of a diameter of the wire electrode, a workpiece material, a workpiece thickness, and a size error is input from the input device 11 shown in FIG. 5, the controller 1 extracts a correct gain from a corresponding table, and calculates a correct coefficient based on the extracted correct gain. The data on ach of the wire electrode diameter, workpiece material, and the workpiece thickness is data typically input by a machining program when a workpiece is machined. Therefore, the data may be read from the machining program instead of input from the input device.

In the above description, the correction coefficient is calculated in the controller 1, but the correction coefficient may be calculated by a personal computer outside the controller 1, the calculated correction coefficient may be stored in the memory 12 of the controller 1, and the correction coefficient may be used upon wire-cut electric discharge machining.

As described above, in the invention, machining characteristics are corrected based on a machining result, and thus the machining characteristics can be totally corrected for not only the variation of electric constants of the wire-cut electric discharge machine but also mechanical factors so that variation generated when the workpiece is machined can be effectively corrected. In addition, since the controller of the wire-cut electric discharge machine corrects machining characteristics, machining conditions do not need to be changed. Therefore, the very same program and machining conditions can be used for a plurality of machines of the same type so that the management can be simple.

## Claims

1. A wire-cut electric discharge machine which machines a workpiece (25) by applying a voltage intermittently in a machining gap between a wire electrode (24) and the workpiece (25) to generate electric discharge, and controls a relative feeding speed of the wire electrode (24) with respect to the workpiece (25) based on an average machining-gap voltage during machining, **characterized in that** said wire-cut electric discharge machine comprises:
a machining result input unit for inputting at least size error data obtained by subtracting a target size from a measured size of a previously machined workpiece ;
a correction gain memory device (12) for storing correction gains corresponding to wire electrode diameters and/or workpiece materials; and
a first correction coefficient calculating unit for calculating a correction coefficient by dividing the size error data by the correction gain corresponding to the wire electrode diameter and/or workpiece material to obtain a calculation result, and by adding one to the calculation result; wherein
the relative feeding speed of the wire electrode (24) with respect to the workpiece (25) is controlled based on an adjusted value obtained by multiplying the average measured machining-gap voltage value during machining by the correction coefficient calculated by the first correction coefficient calculating unit.

2. The wire-cut electric discharge machine according to claim 1, wherein the machining result input unit further inputs data on the wire electrode diameter, the workpiece material, and a workpiece thickness.

3. The wire-cut electric discharge machine according to claim 1 or 2, wherein the correction gain memory device (12) stores correction gains for a plurality of workpiece thicknesses respectively, and a correction gain for a thickness for which a correction gain is not stored is determined by linear interpolation of the correction gains for thicknesses for which the correction gains are stored.

4. The wire-cut electric discharge machine according to any of claims 1 to 3, wherein the correction gains for positive size errors and the correction gains for negative size errors are separately stored.

5. The wire-cut electric discharge machine according to claim 1, wherein when size error data corresponding to a plurality of workpiece thicknesses is input from the machining result input unit, the first correction coefficient calculating unit calculates a correction coefficient for an arbitrary workpiece thickness by least square linear approximation of correction coefficients for the respective thicknesses.

6. A wire-cut electric discharge machine which machines a workpiece (25) by applying a voltage intermittently in a machining gap between a wire electrode (24) and the workpiece (25) to generate electric discharge, and controls a relative feeding speed of the wire electrode (24) with respect to the workpiece (25) based on a deviation between an average machining-gap voltage during machining and a target voltage, **characterized in that** said wire-cut electric discharge machine comprises:
a machining result input unit for inputting at least size error data obtained by subtracting a target size from a measured size of a previously machined workpiece;
a correction gain memory device (12) for storing correction gains corresponding to wire electrode diameters and/or workpiece materials; and
a second correction coefficient calculating unit for calculating a correction coefficient by dividing the size error data by the correction gain corresponding to the wire electrode diameter and/or the workpiece material to obtain a calculation result, and by adding one to the calculation result; wherein
the relative feeding speed of the wire electrode (24) with respect to the workpiece (25) is controlled based on a deviation between the average machining-gap voltage during machining and a corrected target voltage obtained by multiplying the target voltage by the correction coefficient calculated by the second correction coefficient calculating unit.

7. The wire-cut electric discharge machine according to claim 6, wherein the machining result input unit further inputs data on a wire electrode diameter, a workpiece material, and a workpiece thickness.

8. The wire-cut electric discharge machine according to claim 6 or 7, wherein the correction gain memory device (12) stores correction gains for a plurality of workpiece thicknesses respectively, and a correction gain for a thickness for which a correction gain is not stored is determined by linear interpolation of the correction gains for thicknesses for which the correction gains are stored.

9. The wire-cut electric discharge machine according to any of claims 6 to 8, wherein the correction gains for positive size errors and the correction gains for negative size errors are separately stored.

10. The wire-cut electric discharge machine according to claim 6, wherein when size error data corresponding to a plurality of workpiece thicknesses is input from the machining result input unit, the second correction coefficient calculating unit calculates a correction coefficient for an arbitrary workpiece thickness by least square linear approximation of correction coefficients for the respective thicknesses.

11. An electric discharge machining method using a wire-cut electric discharge machine which machines a workpiece (25) by applying a voltage intermittently in a machining gap between a wire electrode (24) and the workpiece (25) to generate electric discharge, and controls a relative feeding speed of the wire electrode (24) with respect to the workpiece (25) by an average machining-gap voltage during machining, **characterized in that** said electric discharge machining method comprises:
acquiring size error data obtained by subtracting a target size from a measured size of a previously machined workpiece;
storing correction gains corresponding to wire electrode diameters and/or workpiece materials;
calculating a correction coefficient by dividing the size error data by the correction gain corresponding to the wire electrode diameter and/or workpiece material to obtain a calculation result, and by adding one to the calculation result;
calculating an adjusted value by multiplying the average measured machining-gap voltage value during machining by the calculated correction coefficient; and
controlling the relative feeding speed of the wire electrode (24) with respect to the workpiece (25) based on the calculated adjusted value.

12. An electric discharge machining method using a wire-cut electric discharge machine which machines a workpiece (25) by applying a voltage intermittently in a machining gap between a wire electrode (24) and the workpiece (25) to generate electric discharge, and controls a relative feeding speed of the wire electrode (24) with respect to the workpiece (25) based on a deviation between an average machining-gap voltage during machining and a target voltage, **characterized in that** said electric discharge machining method comprises:
acquiring size error data obtained by subtracting a target size from a measured size of a previously machined workpiece;
storing correction gains corresponding to wire electrode diameters and/or workpiece materials;
calculating a correction coefficient by dividing the size error data by the correction gain corresponding to the wire electrode diameter and/or workpiece material to obtain a calculation result, and by adding one to the calculation result; and
controlling the relative feeding speed of the wire electrode (24) with respect to the workpiece (25) based on a deviation between the average machining-gap voltage during machining and a corrected target voltage obtained by multiplying the target voltage by the calculated correction coefficient.

## Patentansprüche

1. Elektrische Drahterodiermaschine, die ein Werkstück (25) bearbeitet, indem sie zum Erzeugen einer elektrischen Entladung intermittierend eine Spannung in einem Bearbeitungsspalt zwischen einer Drahtelektrode (24) und dem Werkstück (25) anlegt, und die auf der Basis einer durchschnittlichen Spannung des Bearbeitungsspalts während der Bearbeitung eine relative Vorschubgeschwindigkeit der Drahtelektrode (24) in Bezug auf das Werkstück (25) steuert, **dadurch gekennzeichnet, dass** die elektrische Drahterodiermaschine umfasst:
eine Bearbeitungsergebnis-Eingabeeinheit zum Eingeben von wenigstens Maßfehlerdaten, die durch Subtrahieren eines Zielmaßes von einem gemessenen Maß eines zuvor bearbeiteten Werkstücks erhalten werden;
ein Korrekturverstärkungs-Speichergerät (12) zum Speichern von Korrekturverstärkungen entsprechend Drahtelektrodendurchmessern und/oder Werkstückmaterialien; und
eine erste Korrekturkoeffizienten-Berechnungseinheit zum Berechnen eines Korrekturkoeffizienten mittels Dividieren der Maßfehlerdaten durch die Korrekturverstärkung entsprechend dem Drahtelektrodendurchmesser und/oder Werkstückmaterial, um ein Berechnungsergebnis zu erhalten, und durch Addieren von Eins zum Berechnungsergebnis; wobei
die relative Vorschubgeschwindigkeit der Drahtelektrode (24) in Bezug auf das Werkstück (25) basierend auf einem angepassten Wert gesteuert wird, der durch Multiplizieren der durchschnittlichen gemessenen Spannung des Bearbeitungsspalts während der Bearbeitung mit dem Korrekturkoeffizienten, der von der erste Korrekturkoeffizienten-Berechnungseinheit berechnet wird, erhalten wird.

2. Elektrische Drahterodiermaschine nach Anspruch 1, wobei die Bearbeitungsergebnis-Eingabeeinheit ferner Daten über den Drahtelektrodendurchmesser, das Werkstückmaterial und eine Werkstückdicke eingibt.

3. Elektrische Drahterodiermaschine nach Anspruch 1 oder 2, wobei das Korrekturverstärkungs-Speichergerät (12) Korrekturverstärkungen für eine Vielzahl von jeweiligen Werkstückdicken speichert, und eine Korrekturverstärkung für eine Dicke, für die keine Korrekturverstärkung gespeichert ist, durch lineare Interpolation der Korrekturverstärkungen von Dicken, für die die Korrekturverstärkungen gespeichert sind, bestimmt wird.

4. Elektrische Drahterodiermaschine nach einem der Ansprüche 1 bis 3, wobei die Korrekturverstärkungen für positive Maßfehler und die Korrekturverstärkungen für negative Maßfehler separat gespeichert sind.

5. Elektrische Drahterodiermaschine nach Anspruch 1, wobei, wenn von der Bearbeitungsergebnis-Eingabeeinheit Maßfehlerdaten, die einer Vielzahl von Werkstückdicken entsprechen, eingegeben werden, die erste Korrekturkoeffizienten-Berechnungseinheit einen Korrekturkoeffizienten für eine willkürlich ausgewählte Werkstückdicke durch Least-Squaresbasierte lineare Approximation an Korrekturkoeffizienten für die jeweiligen Dicken berechnet.

6. Elektrische Drahterodiermaschine, die ein Werkstück (25) bearbeitet, indem sie zum Erzeugen einer elektrischen Entladung intermittierend eine Spannung in einem Bearbeitungsspalt zwischen einer Drahtelektrode (24) und dem Werkstück (25) anlegt, und die basierend auf einer Abweichung zwischen einer durchschnittlichen Spannung des Bearbeitungsspalts während der Bearbeitung und einer Zielspannung eine relative Vorschubgeschwindigkeit der Drahtelektrode (24) in Bezug auf das Werkstück (25) steuert, **dadurch gekennzeichnet, dass** die elektrische Drahterodiermaschine umfasst:
eine Bearbeitungsergebnis-Eingabeeinheit zum Eingeben von wenigstens Maßfehlerdaten, die durch Subtrahieren eines Zielmaßes von einem gemessenen Maß eines zuvor bearbeiteten Werkstücks erhalten werden;
ein Korrekturverstärkungs-Speichergerät (12) zum Speichern von Korrekturverstärkungen entsprechend Drahtelektrodendurchmessern und/oder Werkstückmaterialien; und
eine zweite Korrekturkoeffizienten-Berechnungseinheit zum Berechnen eines Korrekturkoeffizienten mittels Dividieren der Maßfehlerdaten durch die Korrekturverstärkung entsprechend dem Drahtelektrodendurchmesser und/oder dem Werkstückmaterial, um ein Berechnungsergebnis zu erhalten, und durch Addieren von Eins zum Berechnungsergebnis; wobei
die relative Vorschubgeschwindigkeit der Drahtelektrode (24) in Bezug auf das Werkstück (25) basierend auf einer Abweichung zwischen der durchschnittlichen Spannung des Bearbeitungsspalts während der Bearbeitung und einer korrigierten Zielspannung, die durch Multiplizieren der Zielspannung mit dem Korrekturkoeffizienten, der durch die zweite Korrekturkoeffizienten-Berechnungseinheit berechnet wird, erhalten wird, gesteuert wird.

7. Elektrische Drahterodiermaschine nach Anspruch 6, wobei die Bearbeitungsergebnis-Eingabeeinheit ferner Daten über einen Drahtelektrodendurchmesser, ein Werkstückmaterial und eine Werkstückdicke eingibt.

8. Elektrische Drahterodiermaschine nach Anspruch 6 oder 7, wobei das Korrekturverstärkungs-Speichergerät (12) Korrekturverstärkungen für eine Vielzahl von jeweiligen Werkstückdicken speichert, und eine Korrekturverstärkung für eine Dicke, für die keine Korrekturverstärkung gespeichert ist, durch lineare Interpolation der Korrekturverstärkungen von Dicken, für die die Korrekturverstärkungen gespeichert sind, bestimmt wird.

9. Elektrische Drahterodiermaschine nach einem der Ansprüche 6 bis 8, wobei die Korrekturverstärkungen für positive Maßfehler und die Korrekturverstärkungen für negative Maßfehler separat gespeichert sind.

10. Elektrische Drahterodiermaschine nach Anspruch 6, wobei, wenn von der Bearbeitungsergebnis-Eingabeeinheit Maßfehlerdaten entsprechend einer Vielzahl von Werkstückdicken eingegeben werden, die zweite Korrekturkoeffizienten-Berechnungseinheit einen Korrekturkoeffizienten für eine willkürlich ausgewählte Werkstückdicke durch Least-Squaresbasierte lineare Approximation an Korrekturkoeffizienten für die jeweiligen Dicken berechnet.

11. Elektrisches Erodierverfahren, das eine elektrische Drahterodiermaschine verwendet, die ein Werkstück (25) bearbeitet, indem sie zum Erzeugen einer elektrischen Entladung intermittierend eine Spannung in einem Bearbeitungsspalt zwischen einer Drahtelektrode (24) und dem Werkstück (25) anlegt, und die mittels einer durchschnittlichen Spannung des Bearbeitungsspalts während der Bearbeitung eine relative Vorschubgeschwindigkeit der Drahtelektrode (24) in Bezug auf das Werkstück (25) steuert, **dadurch gekennzeichnet, dass** das elektrische Erodierverfahren umfasst:
Erfassen von Maßfehlerdaten, die durch Subtrahieren eines Zielmaßes von einem gemessenen Maß eines zuvor bearbeiteten Werkstücks erhalten werden;
Speichern von Korrekturverstärkungen entsprechend Drahtelektrodendurchmessern und/oder Werkstückmaterialien;
Berechnen eines Korrekturkoeffizienten mittels Dividieren der Maßfehlerdaten durch die Korrekturverstärkung entsprechend dem Drahtelektrodendurchmesser und/oder Werkstückmaterial, um ein Berechnungsergebnis zu erhalten, und durch Addieren von Eins zum Berechnungsergebnis;
Berechnen eines angepassten Wertes durch Multiplizieren der durchschnittlichen gemessenen Spannung des Bearbeitungsspalts während der Bearbeitung mit dem berechneten Korrekturkoeffizienten; und
Steuern der relativen Vorschubgeschwindigkeit der Drahtelektrode (24) in Bezug auf das Werkstück (25), basierend auf dem berechneten angepassten Wert.

12. Elektrisches Erodierverfahren, das eine elektrische Drahterodiermaschine verwendet, die ein Werkstück (25) bearbeitet, indem sie zum Erzeugen einer elektrischen Entladung intermittierend eine Spannung in einem Bearbeitungsspalt zwischen einer Drahtelektrode (24) und dem Werkstück (25) anlegt, und die basierend auf einer Abweichung zwischen einer durchschnittlichen Spannung des Bearbeitungsspalts während der Bearbeitung und einer Zielspannung eine relative Vorschubgeschwindigkeit der Drahtelektrode (24) in Bezug auf das Werkstück (25) steuert, **dadurch gekennzeichnet, dass** das elektrische Erodierverfahren umfasst:
Erfassen von Maßfehlerdaten, die durch Subtrahieren eines Zielmaßes von einem gemessenen Maß eines zuvor bearbeiteten Werkstücks erhalten werden;
Speichern von Korrekturverstärkungen entsprechend Drahtelektrodendurchmessern und/oder Werkstückmaterialien;
Berechnen eines Korrekturkoeffizienten mittels Dividieren der Maßfehlerdaten durch die Korrekturverstärkung entsprechend dem Drahtelektrodendurchmesser und/oder Werkstückmaterial, um ein Berechnungsergebnis zu erhalten, und durch Addieren von Eins zum Berechnungsergebnis; und
Steuern der relativen Vorschubgeschwindigkeit der Drahtelektrode (24) in Bezug auf das Werkstück (25), basierend auf einer Abweichung zwischen der durchschnittlichen Spannung des Bearbeitungsspalts während der Bearbeitung und einer korrigierten Zielspannung, die durch Multiplizieren der Zielspannung mit dem berechneten Korrekturkoeffizienten erhalten wird.

## Revendications

1. Machine de découpage par fil à décharge électrique qui usine une pièce à usiner (25) en appliquant une tension de manière intermittente dans un intervalle d'usinage entre une électrode en fil (24) et la pièce à usiner(25) pour générer une décharge électrique, et commande une vitesse d'alimentation relative de l'électrode en fil (24) par rapport à la pièce à usiner (25) sur la base d'une tension d'intervalle d'usinage moyenne pendant l'usinage, **caractérisée en ce que** ladite machine de découpage par fil à décharge électrique comprend :
une unité d'entrée de résultat d'usinage pour entrer au moins des données d'erreur de taille obtenues en soustrayant une taille cible d'une taille mesurée d'une pièce à usiner précédemment usinée ;
un dispositif de mémoire de gains de correction (12) pour mémoriser des gains de correction correspondant à des diamètres d'électrode en fil et/ou à des matériaux de pièce à usiner ; et
une première unité de calcul de coefficient de correction pour calculer un coefficient de correction en divisant les données d'erreur de taille par le gain de correction correspondant au diamètre d'électrode en fil et/ou au matériau de pièce à usiner pour obtenir un résultat de calcul, et en ajoutant un au résultat du calcul ; dans laquelle
la vitesse d'alimentation relative de l'électrode en fil (24) par rapport à la pièce à usiner (25) est commandée sur la base d'une valeur ajustée obtenue en multipliant la valeur de tension d'intervalle d'usinage moyenne mesurée pendant l'usinage par le coefficient de correction calculé par la première unité de calcul de coefficient de correction.

2. Machine de découpage par fil à décharge électrique selon la revendication 1, dans laquelle l'unité d'entrée de résultat d'usinage entre en outre des données sur le diamètre d'électrode de fil, le matériau de pièce à usiner, et une épaisseur de pièce à usiner.

3. Machine de découpage par fil à décharge électrique selon la revendication 1 ou 2, dans laquelle le dispositif de mémoire de gains de corrections (12) stocke des gains de correction pour une pluralité d'épaisseurs de pièce à usiner, respectivement, et un gain de correction pour une épaisseur pour laquelle un gain de correction n'est pas mémorisé est déterminé par interpolation linéaire des gains de correction pour des épaisseurs pour lesquelles les gains de correction sont mémorisés.

4. Machine de découpage par fil à décharge électrique selon l'une quelconque des revendications 1 à 3, dans laquelle les gains de correction pour les erreurs de taille positives et les gains de correction pour les erreurs de taille négatives sont mémorisés séparément.

5. Machine de découpage par fil à décharge électrique selon la revendication 1, dans laquelle lorsque des données d'erreur de taille correspondant à une pluralité d'épaisseurs de pièce à usiner sont entrées par l'unité d'entrée de résultat d'usinage, la première unité de calcul de coefficient de correction calcule un coefficient de correction pour une épaisseur de pièce à usiner arbitraire par approximation linéaire des moindres carrés de coefficients de correction pour les épaisseurs respectives.

6. Machine de découpage par fil à décharge électrique qui usine une pièce à usiner (25) en appliquant une tension de manière intermittente dans un intervalle d'usinage entre une électrode en fil (24) et la pièce à usiner(25) pour générer une décharge électrique, et commande une vitesse d'alimentation relative de l'électrode en fil (24) par rapport à la pièce à usiner (25) sur la base d'un écart entre une tension d'intervalle d'usinage moyenne pendant l'usinage et une tension cible, **caractérisée en ce que** ladite machine de découpage par fil à décharge électrique comprend :
une unité d'entrée de résultat d'usinage pour entrer au moins des données d'erreur de taille obtenues en soustrayant une taille cible d'une taille mesurée d'une pièce à usiner précédemment usinée ;
un dispositif de mémoire de gains de correction (12) pour mémoriser des gains de correction correspondant à des diamètres d'électrode en fil et/ou à des matériaux de pièce à usiner ; et
une seconde unité de calcul de coefficient de correction pour calculer un coefficient de correction en divisant les données d'erreur de taille par le gain de correction correspondant au diamètre d'électrode en fil et/ou au matériau de pièce à usiner pour obtenir un résultat de calcul, et en ajoutant un au résultat du calcul ; dans laquelle
la vitesse d'alimentation relative de l'électrode en fil (24) par rapport à la pièce à usiner (25) est commandée sur la base d'un écart valeur entre la valeur de tension d'intervalle d'usinage moyenne pendant l'usinage et une tension cible corrigée obtenue en multipliant la tension cible par le coefficient de correction calculé par la seconde unité de calcul de coefficient de correction.

7. Machine de découpage par fil à décharge électrique selon la revendication 6, dans laquelle l'unité d'entrée de résultat d'usinage entre en outre des données sur un diamètre d'électrode de fil, un matériau de pièce à usiner et une épaisseur de pièce à usiner.

8. Machine de découpage par fil à décharge électrique selon la revendication 6 ou 7, dans laquelle le dispositif de mémoire de gains de correction (12) mémorise des gains de correction pour une pluralité d'épaisseurs de pièce à usiner, respectivement, et un gain de correction pour une épaisseur pour laquelle un gain de correction n'est pas mémorisé est déterminé par interpolation linéaire des gains de correction pour des épaisseurs pour lesquelles les gains de correction sont stockés.

9. Machine de découpage par fil à décharge électrique selon l'une quelconque des revendications 6 à 8, dans laquelle les gains de correction pour des erreurs de taille positives et les gains de correction pour des erreurs de taille négatives sont mémorisés séparément.

10. Machine de découpage par fil à décharge électrique selon la revendication 6, dans laquelle lorsque des données d'erreur de taille correspondant à une pluralité d'épaisseurs de pièce à usiner sont entrées par l'unité d'entrée de résultat d'usinage, la seconde unité de calcul de coefficient de correction calcule un coefficient de correction pour une épaisseur de pièce à usiner arbitraire par approximation linéaire des moindres carrés de coefficients de correction pour les épaisseurs respectives.

11. Procédé d'usinage par décharge électrique utilisant une machine de découpage par fil à décharge électrique qui usine une pièce à usiner (25) en appliquant une tension de manière intermittente dans un intervalle d'usinage entre une électrode en fil (24) et la pièce à usiner (25) pour générer une décharge électrique, et commande une vitesse d'alimentation relative de l'électrode en fil (24) par rapport à la pièce à usiner (25) par une tension d'intervalle d'usinage moyenne pendant l'usinage, **caractérisé en ce que** ledit procédé d'usinage par décharge électrique comprend les étapes consistant à :
acquérir des données d'erreur de taille obtenues en soustrayant une taille cible d'une taille mesurée d'une pièce à usiner précédemment usinée ;
mémoriser des gains de correction correspondant à des diamètres d'électrode en fil et/ou des matériaux de pièce à usiner ;
calculer un coefficient de correction en divisant les données d'erreur de taille par le gain de correction correspondant au diamètre d'électrode en fil et/ou au matériau de pièce à usiner pour obtenir un résultat de calcul, et en en ajoutant un au résultat du calcul ;
calculer une valeur ajustée en multipliant la valeur de tension d'intervalle d'usinage moyenne mesurée pendant l'usinage par le coefficient de correction calculé ; et
commander la vitesse d'alimentation relative de l'électrode en fil (24) par rapport à la pièce à usiner à usiner (25) sur la base de la valeur ajustée calculée.

12. Procédé d'usinage par décharge électrique utilisant une machine de découpage par fil à décharge électrique qui usine une pièce à usiner (25) en appliquant une tension de manière intermittente dans un intervalle d'usinage entre une électrode en fil (24) et la pièce à usiner (25) pour générer une décharge électrique, et commande une vitesse d'alimentation relative de l'électrode en fil (24) par rapport à la pièce à usiner à usiner (25) sur la base d'un écart entre une tension d'intervalle d'usinage moyenne pendant l'usinage et une tension cible, **caractérisé en ce que** ledit procédé d'usinage par décharge électrique comprend les étapes consistant à :
acquérir des données d'erreur de taille obtenues en soustrayant une taille cible d'une taille mesurée d'une pièce à usiner précédemment usinée ;
mémoriser des gains de correction correspondant à des diamètres d'électrodes en fil et/ou des matériaux de pièce à usiner ;
calculer un coefficient de correction en divisant les données d'erreur de taille par le gain de correction correspondant au diamètre d'électrode en fil et/ou au matériau de pièce à usiner pour obtenir un résultat de calcul, et en ajoutant un au résultat du calcul ; et
commander la vitesse d'alimentation relative de l'électrode en fil (24) par rapport à la pièce à usiner (25) sur la base d'un écart entre la tension d'intervalle d'usinage moyenne pendant l'usinage et une tension cible corrigée obtenue en multipliant la tension cible par le coefficient de correction calculé.
